# EUROPEAN PATENT SPECIFICATION

(11) **EP 1 457 305 B1**
(45) Date of publication and mention of the grant of the patent: **12.10.2011**
(21) Application number: 04006011.3
(22) Date of filing: 12.03.2004
(51) Int. Cl.: B29C 61/06, C08J 9/42, B29K 21/00, B29K 91/00, B29K 101/12, B29K 105/04, B29K 105/34

(54) **Thermally expandable material and method for producing the same**
Thermisch ausdehnbares Material und Herstellungsverfahren
Matériau thermoexpansible et procédé de sa fabrication

(30) Priority: 14.03.2003 JP 2003069943
(43) Date of publication of application: 15.09.2004
(73) Proprietor: NICHIAS CORPORATION, Tokyo (JP)
(72) Inventor: Murakami, Atsushi, Shinmiyakoda Hamamatsu-shi Shizuoka (JP); Hashimoto, Kinro, Shinmiyakoda Hamamatsu-shi Shizuoka (JP)
(74) Representative: Grünecker, Kinkeldey, Stockmair & Schwanhäusser Anwaltssozietät

(56) References cited:
- EP-A- 1 184 149
- EP-A- 1 413 597
- GB-A- 1 578 366
- GB-A- 2 201 612
- PATENT ABSTRACTS OF JAPAN vol. 0111, no. 01 (C-413), 31 March 1987 (1987-03-31) & JP 61 252239 A (HUMAN IND CORP), 10 November 1986 (1986-11-10)
- PATENT ABSTRACTS OF JAPAN vol. 0111, no. 01 (C-413), 31 March 1987 (1987-03-31) & JP 61 252238 A (HUMAN IND CORP), 10 November 1986 (1986-11-10)

## Description

### FIELD OF THE INVENTION

The present invention relates to a thermally expandable material which expands from a compressed state by heat to increase its thickness.

### BACKGROUND OF THE INVENTION

For fluid sealing of joints, soundproofing and heat insulation in architectural structures, industrial instruments and automobiles, various foam materials such as urethane foams and liquid curable sealing materials such as silicone sealants have widely been used. In order to express the sufficient performances of fluid sealing, soundproofing and heat insulation, it is necessary to fill in joint gaps of structures with these materials.

A sealing material comprising a conventional foam material is mounted in a compressed state on a desired site, and the joint gap is filled in with the foam material by thickness recovery due to the elastic force of the material itself. However, the conventional foam material is restored momentarily when the pressure is released. It is therefore necessary to mount the foam material or an assembly using the foam material on a portion necessary for fluid sealing, soundproofing and heat insulation while keeping a state withstanding the restoring force of the foam material in the compressed state. Accordingly, the conventional foam material is extremely deteriorated in workability for mounting it.

When the foam material is made to have a smaller thickness, the workability for mounting the foam material is improved. However, the performances of fluid sealing, soundproofing and heat insulation become insufficient because of the development of a gap. Further, a soft foam material is used to reduce the restoring force of the foam material in the compressed state, thereby being able to improve the workability to some degree. However, the workability is not sufficient. Moreover, the foam material having low restoring force is unfavorably poor in the performance of fluid sealing.

As described above, the performances of fluid sealing, soundproofing and heat insulation are incompatible with the mounting properties, so that a sealing material satisfying the respective characteristics has been demanded.

Against such a background, it is also used a thermally expandable material in which a thermally foamable rubber composition is arranged in a seal portion, and the seal portion is heated, thereby foaming the resin to block a gap. For example, a thermally expandable sealing material obtained by compounding a core material comprising a thermoplastic resin and a cladding comprising a crosslinkable polymer has been known (see patent document 1). However, there is a fear that when expanded in its thickness direction (e.g., vertical direction), this thermally expandable material decreases in lengths in its plane direction (e.g., horizontal direction) to develop a gap in the plane direction, resulting in impaired sealing properties. Further, in the production thereof, a special equipment such as a two-layer extruder is required.

Further, a thermally expandable tube comprising a mixture of a thermoplastic resin and a crosslinked rubber has also been known (for example, see patent document 2 and patent document 3). However, this thermally expandable tube also has the problem that when expanded in its thickness direction, the tube decreases in lengths in its plane direction to develop a gap in the plane direction.

As the thermally expandable materials, there have also been known a shape-memory urethane polymer foam (for example, see patent document 4), and a shape-memory cured rubber formed body obtained by blending a resin such as a polyolefin with a rubber (for example, see patent document 5, patent document 6, patent document 7, patent document 8 and patent document 9). Further, it has been know that polynorbornene or a styrene-butadiene copolymer can become a shape-memory polymer. A thermally expandable material which expands in a sponge form by heating to increase its thickness can be obtained by producing a sponge using each of these raw materials, compressing it, and further fixing the shape as it is in the compressed state. Further, a shape-memory foam in which a resin is blended with a rubber (for example, see patent document 10) has been known. However, these thermally expandable materials are all insufficient in the performance of maintaining the compressed state, so that it is difficult to store them in the compressed state for a long period of time. Further, these are insufficient in the thermally expanding characteristics of rapidly expanding at a specific temperature.

Besides, thermally expandable materials which are each obtained by compounding a foam material and a thermosetting resin as a fixing agent have been known (see patent document 11, patent document 12, patent document 13 and patent document 14). However, these thermally expandable materials cannot maintain the compressed shape thereof for a long period of time because of insufficient performance as the fixing agent, so that there is a fear of expansion during their storage. Further, a thermally expandable material obtained by compounding a foam of a high-melting point resin and a low-melting point thermoplastic resin has also been known (see patent document 15). However, in this thermally expandable material, a foam material is constituted by a thermoplastic resin. Accordingly, when a long period of time has elapsed in the compressed state, elastic restoring force decreases due to creep, resulting in failure to expand in some cases even when it is heated after a long-period storage. Further, a thermally expandable material obtained by compounding a urethane foam, a thermoplastic resin and asphalt has also been known (see patent document 16). However, this thermally expandable material is compressed at ordinary temperatures, and the compressed state thereof is maintained by the viscosity of asphalt alone. Accordingly, it cannot maintain the compressed shape thereof for a long period of time, so that there is a fear of expansion during its storage. Conversely, a raw material for the foam material is the urethane foam, not the crosslinked rubber, so that it does not expand by the permanent set of the urethane foam in some cases even when heated.

The present applicant also previously proposed a thermally expandable material obtained by impregnating a foam material with a thermoplastic material (see patent document 17). However, additional tests revealed that the thermally expandable material cannot maintain the compressed shape for a long period of time, or does not expand even when heated, when it is stored in the compressed state for a long period of time, for example, at 50°C, which is assumed to be a temperature in a warehouse during the summer season.
Patent Document 1: JP 56-163181 A
Patent Document 2: JP 52-146482 A
Patent Document 3: JP 53-78282 A
Patent Document 4: JP 7-39506 B
Patent Document 5: JP 9-309986 A
Patent Document 6: JP 2000-191847 A
Patent Document 7: JP 2000-217191 A
Patent Document 8: JP 2001-40144 A
Patent Document 9: JP 2002-12707 A
Patent Document 10: JP 2000-1558 A
Patent Document 11: JP 60-171142 A
Patent Document 12: JP 63-32611 B
Patent Document 13: JP 05-63291 B
Patent Document 14: JP 08-174588 A
Patent Document 15: JP 08-34871 A
Patent Document 16: JP 05-64092 B
Patent Document 17: JP 2002-69228 A
EP 1184149JP-A- 61-252239 , JP-A-61-252238, and EP1413597 disclose foam materials which may be used for example in automobiles.

### SUMMARY OF THE INVENTION

The invention has been made in view of the above-mentioned situation.

Therefore, an object thereof is to provide a thermally expandable material excellent in the respective performances of fluid sealing, soundproofing and heat insulation and also in a mounting operation on each site to be treated, and inexpensively obtained without requiring a special material and equipment in the production.

Another object of the invention is to provide a method for easily obtaining the above-mentioned thermally expandable material.

A still other object of the invention is to provide joint material excellent in the sealing performance and a soundproof cover for an automobile engine excellent in soundproofing properties, using the above-mentioned thermally expandable material.

Other objects and effects of the invention will become apparent from the following description.

As a result of extensive studies for solving the above-mentioned problems, the present inventors found that a thermally expandable material which maintains a compressed state even at a relatively high temperature for a longer period of time than a conventional one and whose expansion rate by heating is high, can be obtained by impregnating a foam material comprising a crosslinked rubber with a crystalline thermoplastic resin (and optionally with a wax), heating and compressing the foam material thus impregnated, then, cooling it in a compressed state, and releasing the pressure. Then, the inventors found that the use of such a thermally expandable material to a site to be treated provides the excellent respective performances of fluid sealing, soundproofing and heat insulation, and makes easy a mounting operation on each site to be treated. Further, the inventors concurrently found that such a thermally expandable material provides a soundproof cover for an automobile engine excellent in the mounting properties and soundproofing performance. The invention is based on these findings.

That is, the above-describe objects of the invention have been achieved by providing a thermally expandable material expandable from a compressed state by heat, as defined in claim 1 Preferred embodiments are given in claims 2 to 13

Further, the present invention also provides a method for producing a thermally expandable material, as defined herein.

The present invention also provides a joint material and a soundproof cover for an automobile engine, each comprising the above-described thermally expandable material.

### BRIEF DESCRIPTION OF THE DRAWINGS

Fig. 1 is a schematic perspective view showing one embodiment of an engine soundproof cover (for a V type engine).
Fig. 2 is a schematic view for illustrating a state of the engine soundproof cover of Fig 1 mounted on an engine (before heating).
Fig. 3 is a schematic view for illustrating a state of the engine soundproof cover of Fig 1 mounted on an engine (after heating).
Fig. 4 is a graph showing the results of the thermal expansion test for respective test pieces in Examples 1, 2 and 9.
Fig. 5 is a graph showing the results of the thermal expansion test for respective test pieces in Examples 3 to 5.
Fig. 6 is a graph showing the results of the thermal expansion test for respective test pieces in Examples 6 to 8.
Fig. 7 is a graph showing the results of the thermal expansion test for respective test pieces in Comparative Examples 1, 2, 4 and 5.
Fig. 8 is a graph showing the results of the shape retaining test for respective test pieces in Examples 1, 2 and 9.
Fig. 9 is a graph showing the results of the shape retaining test for respective test pieces in Examples 3 to 5.
Fig. 10 is a graph showing the results of the shape retaining test for respective test pieces in Examples 6 to 8.
Fig. 11 is a graph showing the results of the shape retaining test for respective test pieces in Comparative Examples 1, 2, 4 and 5.

The reference numerals used in the drawings denotes the followings, respectively.
10: Engine Soundproof Cover
11: Cover Main Body
12: (Shape-Memory) Foam Material
13: Intake Manifold
14: Intake Collector
15: Fastening Holes
20: Engine
21: Thermally Expandable Material

### BACKGROUND OF THE INVENTION

The invention is described with reference to drawings in detail below.

In the invention, it is necessary that the rubber material constituting the foam material is crosslinked. When it is not crosslinked, the permanent set occurs by long-term storage in a compressed state, resulting in failure to express the characteristics of increasing the thickness by heating, namely the thermally expanding characteristics. Further, in order to carry out a compressing operation, it is necessary that the foam material is flexible. When the foam material is not flexible, the foam material is unfavorably destructed by the compressing operation.

The crosslinked rubber for use in the invention is a crosslinked product of a rubber material that can be crosslinked by a chemical crosslinking agent such as sulfur, a sulfur compound, a peroxide or a multifunctional compound, or by irradiation of an ionizing radiation such as a gamma ray or an electron beam, or by heating alone. Examples of the rubbers include natural rubber, epoxidized natural rubber, CR (chloroprene rubber), BR (butadiene rubber), SBR (styrene-butadiene rubber), NBR (nitrile-butadiene rubber), HNBR (hydrogenated nitrile-butadiene rubber), EPM (ethylene-propylene rubber), EPDM (ethylene-propylene-diene ternary copolymer rubber), ECO (hydrin rubber), IIR (butyl rubber), polyether rubber, silicone rubber, fluorosilicone rubber, fluororubber, fluorinated ether rubber, chlorinated polyethylene rubber, acrylic rubber, polysulfide rubber and urethane rubber. Further, these crosslinked rubbers may be used as a mixture of a plurality of them.

In particular, the foam material comprising the crosslinked rubber of EPDM is preferred as the foam material for use in the thermally expandable material of the invention, because of its excellent heat resistance, ozone resistance and cost balance.

Almost all foam materials exemplified above, including the EPDM foam, are marketed and easily available, and require no special equipment in production, so that the thermally expandable material can be obtained easily and inexpensively. In contrast, in conventional thermally expandable materials, it is necessary to use special raw materials to prepare foam materials. It is therefore difficult to obtain the raw materials, so that the thermally expandable materials cannot be easily obtained. Further, special production equipment for the foam materials becomes necessary in some cases.

As shown in a shape retention/thermal expansion mechanism described later, the thermally expandable material of the invention maintains the shape at ordinary temperatures, and thermally expands by heating. Accordingly, it is desirable that the crystalline thermoplastic resin and the wax have a significant difference in elastic modulus between an ordinary temperature region and a high temperature region. When the temperatures of the crystalline thermoplastic resin and the wax reach the melting points, the elastic moduli thereof rapidly decrease. Accordingly, also in the thermally expandable material of the invention, the shape is restored at a temperature around the melting point (high temperature region). Accordingly, when the difference in elastic modulus between both temperature regions is significant, shape retention/shape restoration are better performed, and the thermally expandable material which rapidly thermally expands at a specific temperature is obtained. In the invention, the term "ordinary temperature" means the temperature range of 5 to 35°C, considering seasonal temperature variations between the summer season and the winter season.

Further, it is preferred that the crystalline thermoplastic resin and the wax each has a melting point between a heating temperature actually used for thermal expansion (hereinafter referred to as an execution heating temperature) and ordinary temperature. In particular, the crystalline thermoplastic resin and the wax each having a melting point or a softening point of 120°C or less, preferably a melting point of 40 to 120°C are preferably used for the following reasons. Of the crosslinked rubbers used in the foam materials described above, some may be deteriorated to lose elastic restoring force, if they are heated at a temperature of 120°C or more for thermal expansion, resulting in failure to express shape restoring properties. Further, a considerable length of time is required to entirely heat the thermally expandable material at a temperature of 120°C or more for thermal expansion, so that it becomes necessary to use a heating apparatus having high heating capacity. The melting point is measurable by differential scanning calorimetry (DSC).

It is preferred that the crystalline thermoplastic resin and the wax agree with each other in melting point, and the difference in melting point between both is preferably 20°C or less, more preferably 10°C or less, and still more preferably 5°C or less.

The crystalline thermoplastic resins meeting the above-mentioned various requirements may be any as long as they show crystallinity. Examples of the crystalline thermoplastic resins usable in the invention include, ethylene copolymers such as an ethylene-vinyl acetate copolymer, an ethylene-acrylic acid copolymer, an ethylene-vinyl alcohol copolymer, an ethylene-propylene copolymer resin and an ionomer resin; polyethylenes such as low-density polyethylene, intermediate-density polyethylene, high-density polyethylene and ultra-high-molecular-weight polyethylene; modified polyethylenes such as chlorinated polyethylene; polyester resins such as polyethylene terephthalate, polybutylene terephthalate, polycyclohexylenedimethylene terephthalate, a liquid crystalline polyester, polyhydroxybutyrate, polycaprolactone, polyethylene adipate, polylactic acid, polybutylene succinate, polybutyl adipate and polyethylene succinate; polyketone resins such as polyether ether ketone; fluororesins such as polytetrafluoroethylene (a tetrafluoroethylene resin), a tetrafluoroethylene-perfluoroalkyl vinyl ether copolymer (a tetrafluoroethylene-perfluoroalkoxyethylene copolymer resin), a tetrafluoroethylene-hexafluoropropylene copolymer (a tetrafluoroethylene-hexafluoropropylene copolymer resin), a tetrafluoroethylene-ethylene copolymer (a tetrafluoroethylene-ethylene copolymer resin), polyvinylidene fluoride (a vinylidene fluoride resin), polychlorotrifluoroethylene (a chlorotrifluoroethylene resin), a chlorotrifluoroethylene-ethylene copolymer (a chlorotrifluoroethylene-ethylene copolymer resin) and polyvinyl fluoride (a vinyl fluoride resin); polyamide resins such as nylon 6, nylon 66, nylon 46, semi-aromatic nylon 6T, nylon MXD, nylon 610, nylon 612, nylon 11 and nylon 12; polypropylene resins such as atactic polypropylene, isotactic polypropylene and syndiotactic polypropylene; polyether resins such as polyethylene oxide and polypropylene oxide; and besides, polyacetal, isotactic polystyrene, syndiotactic polystyrene, a polyphenylene sulfide, a polyethernitrile, syndiotactic 1,2-polybutadiene, trans-1,4-polyisoprene, polymethylpentene, polyvinylidene chloride and polyvinyl alcohol, etc. Further, resins obtained by copolymerizing another monomer with these, or polymer alloys obtained by grafting another oligomer to these can also be used. Furthermore, a thermoplastic elastomer can also be used, and examples thereof include a polyolefinic thermoplastic elastomer, a polyester-based thermoplastic elastomer, a polyamide-based thermoplastic elastomer, a fluororesin-based elastomer, etc. Of these, some show no crystallinity, depending on the molecular structure or the forming conditions. However, in the invention, those showing crystallinity can be used as the crystalline thermoplastic resins.

Of these crystalline thermoplastic resins, the ethylene copolymer can provide a thermally expandable material having good shape retention/thermal expansion. More particularly, the ethylene-vinyl acetate copolymer is inexpensive, commercially available as a product having a variety of melting point according to the copolymerization ratio of vinyl acetate to ethylene, and easily available in an emulsion state described later, so that this copolymer is preferred. However, the ethylene-vinyl acetate copolymer comes to show no crystallinity when the copolymerization ratio of vinyl acetate decreases. Accordingly, the ethylene-vinyl acetate copolymer having a vinyl acetate copolymerization ratio of less than 50%, preferably less than 40%, more preferably 30% is preferably used in the invention.

When a resin showing no crystallinity, that is, an amorphous resin such as polystyrene, is used in place of the crystalline thermoplastic resin, a rapid reduction in elastic modulus associated with crystal fusion at the melting point, which is observed in the crystalline thermoplastic resin, does not occur. The amorphous resin shows a reduction in elastic modulus at its glass transition temperature, but the reduction is not so rapid as that of the crystalline resin. Accordingly, in the invention, the amorphous resin cannot be used in place of the crystalline thermoplastic resin.

The waxes meeting the above-mentioned various conditions include, petroleum waxes such as paraffin wax, microcrystalline wax and petrowax; animal waxes such as whale wax, bees wax, Chinese wax and wool wax; vegetable waxes such as candelilla wax, carnauba wax, Japan wax and sugar cane wax; mineral waxes such as montan wax, ozokerite, ceresin and lignite wax; synthetic hydrocarbon waxes such as Fischer-Tropsch wax and a derivative thereof, and low-molecular-weight polyethylene and a derivative thereof; modified waxes such as a montan wax derivative, a paraffin wax derivative and a microcrystalline wax derivative; aliphatic alcohols such as cetyl alcohol; fatty acids such as stearic acid; aliphatic esters such as glycerol stearate and polyethylene glycol stearate; hydrogenated waxes such as caster wax and opal wax; synthetic ketone amine amides such as armor wax and Acrawax; chlorinated hydrocarbons; synthetic animal waxes; and α-olefins. In particular, the paraffin wax is inexpensive, commercially available as a product having a variety of melting point according to its molecular weight, and easily available in an emulsion state described later, and the thermally expandable material is easily produced. Accordingly, this wax is preferred.

In the invention, it is necessary to use mixture of the crystalline thermoplastic resin and the wax. When the crystalline thermoplastic resin alone is used, the characteristics of maintaining the compressed state, namely the shape retaining characteristics are sufficient, but the thermally expanding characteristics expanding by heating are poor, compared to the case that the crystalline thermoplastic resin is used in combination with the wax. It is therefore that the crystalline thermoplastic resin is used in combination with the wax. On the other hand, only the wax is used, the thermally expanding characteristics are sufficient, but the shape retaining characteristics are insufficient. A combined use of both the crystalline thermoplastic resin and the wax provides the thermally expandable material sufficient in both the shape retaining characteristics and the thermally expanding characteristics, and rapidly thermally expandable at a certain temperature. The thermally expanding characteristics are improved with an increase in the ratio of the wax. However, the shape retaining characteristics are more improved than in the case of the crystalline thermoplastic resin alone or the wax alone. This is an unexpected phenomenon. Contents of this mechanism presumed by the present inventors will be described later.

The crystalline thermoplastic resin is used in combination with the wax in the invention and there is an optimum ratio between the crystalline thermoplastic resin and the wax. The ratio of the crystalline thermoplastic resin to the wax is preferably from 1:99 to 99:1, more preferably from 90:10 to 70:30, and still more preferably from 70:30 to 50:50, by weight ratio. By adjusting the ratio of the crystalline thermoplastic resin to the wax to this range, the thermally expandable material is obtained which is sufficient in both the shape retaining characteristics and the thermally expanding characteristics, and rapidly thermally expandable at a certain temperature.

Further, when the total impregnation amount by the crystalline thermoplastic resin and the wax is too much, the characteristics of maintaining the compressed state, namely the shape retaining characteristics are sufficient, but the thermally expanding characteristics expanding by heating are insufficient. On the other hand, when the total impregnation amount by the crystalline thermoplastic resin and the wax is too little, the thermally expanding characteristics are sufficient, but the shape retaining characteristics are insufficient. Accordingly, the total impregnation amount by the crystalline thermoplastic resin and the wax is preferably 0.002 g to 0.1 g, more preferably from 0.005 g to 0.08 g, and still more preferably from 0.008 g to 0.05 g, per cm³ of crosslinked rubber (These preferred amount ranges also apply to the case where the crystalline thermoplastic resin is used singly for the impregnation). By adjusting the impregnation amount to this range, the thermally expandable material is obtained which is sufficient in both the shape retaining characteristics and the thermally expanding characteristics.

In order to impregnate the foam material comprising the crosslinked rubber with the crystalline thermoplastic resin or with the crystalline thermoplastic resin and the wax, it is possible to use all techniques, and the thermally expandable material is easily obtained by using any techniques. It is easiest to use both the crystalline thermoplastic resin and the wax in an emulsion state, and hard to cause contamination of working environment, so that it is preferred. The foam material comprising the crosslinked rubber can be impregnated with the crystalline thermoplastic resin or with the crystalline thermoplastic resin and the wax, in the emulsion state, and then, the foam material may be pressed to adjust the impregnation amount, as needed. Further, it is also possible to control the impregnation amount by appropriately changing the concentration of the emulsion and the degree of pressing.

The term "emulsion" as used herein means a state in which a material is dispersed in water. As the emulsion of the crystalline thermoplastic resin, there may be used a resin obtained by emulsion polymerization (i.e., a resin obtained by polymerization in an emulsion state) as it is. Alternatively, polymers obtained by any polymerization method may be emulsified in water. The wax emulsion may be obtained by dispersing the wax in water to form an emulsion. In order to stably keep the dispersed state, a surfactant is used as needed. Although various surfactants can be used, a nonionic surfactant is preferred, because a stably dispersed emulsion can be obtained by using a nonionic surfactant. The crystalline thermoplastic resins and the waxes are both commercially available in their emulsion states, and may be used as such. Surfactants other then the nonionic surfactant include, for example, an anionic surfactant. However, an emulsion dispersed with an anionic surfactant is destabilized by addition of the nonionic surfactant, the presence of a metal ion or a drop in pH caused by dissolution of carbon dioxide, and there is a fear that the crystalline thermoplastic resin and the wax in the dispersed state may be precipitated. For example, when an emulsion of the wax dispersed with an anionic surfactant is added to an emulsion of the crystalline thermoplastic resin dispersed with a nonionic surfactant, the wax will be precipitated. Accordingly, it becomes difficult to impregnate the foam material comprising the crosslinked rubber therewith. In the invention, therefore, a nonionic surfactant is preferred as the surfactant for the emulsion of the crystalline thermoplastic resin and the wax.

As a method other than impregnation with the emulsion, the crystalline thermoplastic resin or the crystalline thermoplastic resin and the wax may be dissolved in a solvent, and the foam material comprising the crosslinked rubber may be impregnated with the resulting solution.

In order to impregnate the foam material comprising the crosslinked rubber with the crystalline thermoplastic resin and the wax, it is possible to use all techniques including the respective techniques exemplified above. When the crystalline thermoplastic resin emulsion and the wax emulsion are used, a method for evaporating water after impregnation is not particularly limited, and for example, a technique such as blowing of hot air or vacuum drying can be employed.

Then, the above-mentioned foam material comprising the crosslinked rubber impregnated with the crystalline thermoplastic resin or with the crystalline thermoplastic resin and the wax is heat-compressed to a predetermined thickness, and then cooled to a temperature lower than the melting point of the crystalline thermoplastic resin or than the melting points of the crystalline thermoplastic resin and the wax while maintaining this compressed state. As for the compression amount, the foam material comprising the crosslinked rubber is preferably compressed to one-half or less of its thickness before compression, for the purpose of obtaining the respective excellent performances of fluid sealing, soundproofing and heat insulation on the site to be treated. In the above-mentioned sequence of shape retaining operations, the foam material comprising the crosslinked rubber after impregnation may be heat-compressed with a hot press, and cooled in the compressed state. Further, the foam material comprising the crosslinked rubber after impregnation may be heated in an oven, taken out of the oven, immediately compressed with a press, and cooled. Alternatively, a weight may be placed for compression without using the press. In order to continuously produce the foam material, the foam material comprising the crosslinked rubber after impregnation may be heat-compressed with a hot roll, and cooled as it is compressed with a cold roll, using a calender roll. Further, in the case where there is a step of drying water of the emulsion, the heating step may be carried out making use of the heat for drying, and cooling under compression with a cooling roll may be carried out immediately after this drying step. The shape retaining operations are not limited to the above-described methods, and any operations may be employed as long as they can heat-compress the foam material comprising the crosslinked rubber after impregnation, and cool it in the compressed state. The heating temperature in the above-mentioned forming process is within the range of 80 to 200°C, and the cooling temperature is preferably within the range of 25 to 80°C. Then, after cooling, the pressure is released to obtain the thermally expandable material of the invention.

The thermally expandable material of the invention has shape-memory ability that the compressed state is maintained at ordinary temperatures and released by heating. Accordingly, in the thermally expandable material of the invention, there are respective mechanisms for shape retaining properties and shape restoring properties. Although the thermally expandable material according to the invention is not limited by a specific theory, the present inventors presume the shape retaining properties and the shape restoring properties to be expressed by the following mechanisms.

When the foam material comprising the crosslinked rubber is compressed, thickness restoring force acts by elasticity. Accordingly, in order to express the shape retaining properties, shape retaining force higher than the restoring force is required. On the other hand, the crystalline thermoplastic resin and the wax are softened on heating to lower rigidity, and go into a liquid state depending on the circumstances. In such a state, it is possible to deform the foam material by low stress. Further, the foam material is solidified by cooling as it is deformed, thereby forming a hardened material to increase rigidity, which makes it possible to keep the deformed shape. Accordingly, when the foam material comprising the crosslinked rubber is impregnated with the crystalline thermoplastic resin and the wax, heated and cooled as it is compressed, cells of the foam material comprising the crosslinked rubber are adhered with the crystalline thermoplastic resin or the crystalline thermoplastic resin and the wax to maintain the whole foam material comprising the crosslinked rubber in the compressed state. At this time, the foam material comprising the crosslinked rubber tends to restore the thickness by its elastic restoring force. However, the hardened material of crystalline the crystalline thermoplastic resin and the wax act as an adhesive, and the adhesive force thereof exceeds the elastic restoring force, thereby keeping the compressed state.

The above-mentioned thermally expandable material in which the shape is maintained in the compressed state has the shape retaining force higher than the shape restoring force of the foam material comprising the crosslinked rubber. Accordingly, when the shape restoring force exceeds the shape retaining force, the shape restoring properties are expressed. For that purpose, it becomes an effective means to decrease the shape retaining force, that is, the adhesive force due to the crystalline thermoplastic resin and the wax. In the thermally expandable material of the invention, application of heat decreases the shape retaining force. As described above, the crystalline thermoplastic resin and the wax are softened on heating, and it is possible to deform the foam material by low stress. Accordingly, the hardened material of of the crystalline thermoplastic resin and the wax are softened by heating to decrease rigidity, thereby lowering the shape retaining force. Associated therewith, the elastic restoring force of the foam material comprising the crosslinked rubber exceeds the shape retaining force. As a result, the shape restoring properties are expressed in the thermally expandable material.

This is the mechanism of expressing the shape retaining properties and the thermally expanding properties of the shape-memory foam of the invention. In the invention, the use of the crystalline thermoplastic resin and the wax improves both the shape retaining properties and the thermally expanding characteristics. When the foam material comprising the crosslinked rubber is impregnated with the wax alone, the performances of shape retention/thermal expansion are insufficient. The resulting material does not rapidly thermally expand at a certain temperature, or it becomes difficult to store it as it is in the compressed shape for a long period of time. The use of only the crystalline thermoplastic resin exhibits the shape retaining characteristics and the thermally expanding characteristics sufficient to some degree. However, the use thereof in combination with the wax improves both the shape retaining characteristics and the thermally expanding characteristics, and provides the thermally expandable material which rapidly thermally expands at a certain temperature. The thermally expanding characteristics are improved with an increase in the ratio of the wax. However, the shape retaining characteristics are more improved than in the case of the crystalline thermoplastic resin alone or the wax alone. The present inventors consider this phenomenon as follows, but the invention is not limited by this theory.

As described above, the crystalline thermoplastic resin and the wax act as the adhesive which is softened by heat. The adhesive used herein is preferably one rapidly softened at a temperature equal to or higher than a specific temperature. In particular, the wax forms a low-viscosity liquid at a temperature equal to or higher than the melting point to scarcely show the adhesive force, so that it is preferred as the adhesive for the thermally expandable material. However, although the wax forms a solid or a viscous liquid at a temperature equal to or lower than the melting point including ordinary temperature, the rigidity thereof is low, and the performance as the adhesive is insufficient. Accordingly, it starts to expand at a temperature equal to or lower than the melting point, so that it becomes difficult to store it in the compressed state, when long-term storage is required. The adhesive performance is somewhat improved by increasing the amount of the wax used, but insufficient. Further, the excessive use thereof causes the problem of poor appearance.

On the other hand, the crystalline thermoplastic resin has high adhesive force at ordinary temperature, and the shape retaining force of keeping the thermally expandable material in the compressed shape increases in a temperature region equal to or lower than the melting point including ordinary temperature. However, the crystalline thermoplastic resin is rapidly softened at a temperature exceeding the melting point, but the viscosity thereof is not lowered so much as that of the wax, and a certain degree of adhesive force is expressed even at a temperature equal to or higher than the melting point. Accordingly, the thickness slowly increases to show no rapid thermally expanding characteristics. The thermally expandable material comes to show the rapid thermally expanding characteristics at a temperature equal to or higher than the melting point by decreasing the amount of the crystalline thermoplastic resin used. However, it starts to expand at a temperature lower than the melting point, so that it becomes difficult to store it in the compressed state, particularly when long-term storage is required.

In the invention, a combined use of the crystalline thermoplastic resin and the wax expresses the characteristics of expressing mainly the adhesive force in the temperature region equal to or lower than the melting point and the characteristics of forming a low-viscosity liquid in the temperature region equal to or higher than the melting point, which are advantages of both. As described above, the wax is extremely lowered in viscosity in the temperature region equal to or higher than the melting point. Accordingly, a blend of the crystalline thermoplastic resin and the wax is more lowered in viscosity than the crystalline thermoplastic resin alone. Consequently, when the foam material comprising the crosslinked rubber is impregnated with the blend and heat-compressed, the blend is readily adapted to a cell surface of the crosslinked rubber, and faster adhesion becomes possible to improve the shape retaining characteristics. As described above, the wax alone is low in the shape retaining force. Accordingly, by blending the crystalline thermoplastic resin and the wax, the shape retaining characteristics are more improved than the case of the crystalline thermoplastic resin alone or the wax alone.

In the thus-obtained thermally expandable material in the compressed state, cells are adhered to one another with the blend of the crystalline thermoplastic resin and the wax to maintain the compressed state. The blend of the crystalline thermoplastic resin and the wax is softened by heating the thermally expandable material at a temperature equal to or higher than the melting points of both the crystalline thermoplastic resin and the wax, and the viscosity is more lowered than the case of the crystalline thermoplastic resin alone. Consequently, the adhesive force of the cells is lost, and the thermally expanding characteristics are more improved than the case of the crystalline thermoplastic resin alone. Thus, the thermally expanding characteristics are improved with an increase in the ratio of the wax.

Described above are the mechanisms that the thermally expandable material obtained by using the crystalline thermoplastic resin in combination with the wax more rapidly increases its thickness at a certain temperature, and that the compressed shape can be maintained for a longer period of time, in the invention.

As for the heating for thermal expansion, there can be employed, for example, a method of pressing a hot plate heated to a predetermined temperature against the thermally expandable material or a method of blowing hot air thereto. The heating temperature at that time is appropriately set depending on the melting points of the crystalline thermoplastic resin and the wax, and it is sufficient that the thermally expandable material is heated at a temperature around or higher than the melting points.

Assuming the case that the thermally expandable material is stored in a warehouse during the summer season, it is necessary to maintain the compressed shape for a long period of time even at a temperature near 50°C. As for the temperature at which the compressed shape can be maintained for a long period of time, when the melting point of the crystalline thermoplastic resin and the melting point of the wax are too low, it becomes impossible to maintain the compressed shape during long-term storage at a temperature near 50°C. Accordingly, the melting point of the crystalline thermoplastic resin and the melting point of the wax are preferably from 40°C to 120°C, more preferably from 50°C to 110°C, and still more preferably from 60°C to 100°C.

The above-mentioned thermally expandable material according to the invention can be used, for example, for fluid sealing of joints, soundproofing and heat insulation in architectural structures, industrial instruments and automobiles, similarly to a conventional material. As described above, the foam material is usually mounted in a compressed state on a site to be treated, and the joint gap is filled in with the foam material by thickness recovery due to the elastic force of the foam material itself. However, the conventional foam material is restored momentarily when the pressure is released. It is therefore necessary to mount the foam material on the site to be treated while keeping a state withstanding the restoring force of the foam material in the compressed state. Accordingly, the conventional foam material is extremely deteriorated in workability for mounting it. When the foam material is made to have a smaller thickness, the workability for mounting the foam material is improved. However, the respective performances of fluid sealing, soundproofing and heat insulation become insufficient because of the development of the gap. Further, a soft foam material is used to reduce the restoring force of the foam material in the compressed state, thereby being able to improve the workability to some degree. However, the effect thereof is slight, and the performance of fluid sealing is rather deteriorated.

In contrast, according to the thermally expandable material of the invention, the shape is retained in the compressed state, so that the thermally expandable material can be extremely easily mounted on the site to be treated. Further, the shape is restored by application of heat after mounting of the thermally expandable material to fill in the gap, so that the respective performances of fluid sealing, soundproofing and heat insulation are sufficiently expressed. Furthermore, when the thermally expandable material of the invention is used in a machine which generates heat by its operation, such as an industrial instrument or an automobile described later, the thermally expandable characteristics is expressed by the heat generated by the operation of the machine to form the shape of the foam material. Accordingly, the operation of applying heat becomes unnecessary in some cases.

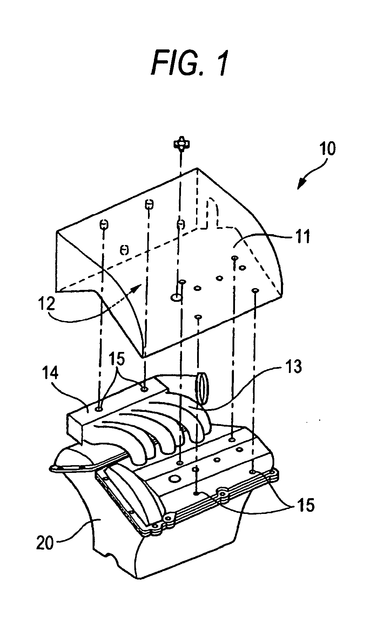

Further, the invention provides a soundproof cover for an automobile engine, in which the above-mentioned thermally expandable material is used as a joint material. Fig. 1 is a perspective view showing an embodiment of an engine soundproof cover 10 used in a V type engine 20. This engine soundproof cover 10 comprises a cover main body 11 made of a metal or a resin and a foam material 12 provided as a soundproof on almost the whole of a face (inner surface) on the engine side of the cover main body 11, and fixed with bolts (not shown) to fastening holes 15 formed in an intake manifold 13, an intake collector 14 or the like. The shape of an engine 20 is complicated, so that the foam material 12 has hitherto been mounted on the engine 20 in a state in which the foam material 12, the joint material, is compressed in its thickness direction, and restored in the thickness by the elastic force of the foam material 12 itself, thereby filling in a gap between the cover main body 11 and the engine 20 to enhance the soundproofing effect. However, the foam material 12 is restored momentarily when the pressure is released. It is therefore necessary to mount the engine soundproof cover 10 on the engine 20 with the foam material 12 in the compressed state withstanding the restoring force thereof. Accordingly, workability for mounting the foam material is extremely deteriorated.

When the foam material 12 is made to have a smaller thickness, the workability for mounting the foam material is improved. However, the soundproofing performance becomes insufficient because of the development of a gap between the foam material and the engine 20. Further, the restoring force from the compressed state can be reduced by using a soft foam material 12, but the effect thereof is slight, rather resulting in a decrease in the strength of the foam material 12, which causes a disadvantage such as shortened life.

Furthermore, the foam material 12 may be formed to the shape of the engine 20. However, the foam material 12 must be prepared for every type of the engine 20, further, for every portion to be provided when the foam materials are mounted on a plurality of portions of the engine 20, which causes an increase in production cost. Moreover, the foam material 12 is not in abutting contact with the engine 20 by pressure, so that a gap is inevitably developed between the foam material 12 and the engine 20 although it is slight. This is also a problem with regard to the soundproofing performance.

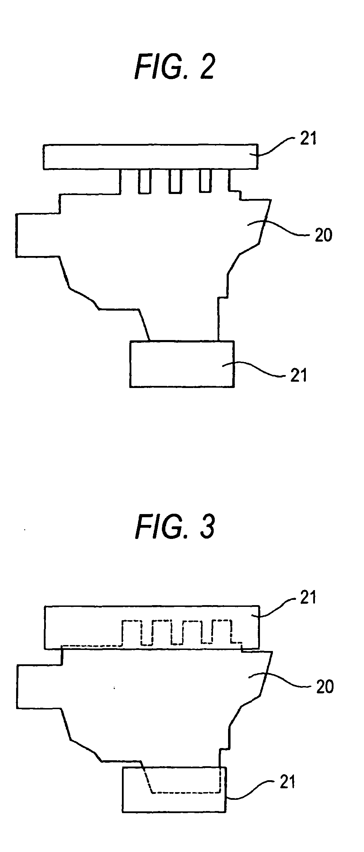

Then, the thermally expandable material of the invention is used as the joint material 12. As shown in Fig. 2 (only the engine 20 and the thermally expandable material 21 are shown for the sake of convenience), the thermally expandable material 21 is maintained in a state in which it is compressed in its thickness direction, and mountable on the engine 20 without withstanding the restoring force of the foam material in the compressed state such as the conventional foam material. In this state, a gap exists between the engine 20 and the thermally expandable material 21 as shown in the drawing. Then, as shown in Fig. 3, when the thermally expandable material 21 in the compressed state is heated at a specified temperature, the thermally expandable material 21 expands in the thickness direction to fill in the above-mentioned gap, thereby obtaining a closely joined state. As described above, by using the thermally expandable material of the invention, not only it is easily mounted on the engine 20, but also the soundproofing performance is improved.

There is no particular limitation on the heating method for thermal expansion, and a method of pressing a hot plate heated at a predetermined temperature to the cover main body 11 or blowing a hot air thereto with a dryer can be employed. In an ordinary automobile, the temperature in an automotive hood is elevated to about 80°C by idling running in many cases. Of the thermally expandable materials, some materials are restored in shape at a temperature equal to or lower than the above-mentioned temperature, for example, at about 75°C. In that case, only idling operation of the engine 20 is required without particularly conducting a heating operation, which can reduce manpower for mounting the thermally expandable materials.

### EXAMPLES

The present invention will be illustrated in greater detail with reference to the following Examples and Comparative Example.

### Example 1

An emulsion of an ethylene-vinyl acetate copolymer emulsified with a nonionic surfactant, the emulsion having a solid concentration of 50% by weight and the copolymer being a crystalline thermoplastic resin having a melting point of 65°C, and an emulsion of a paraffin wax emulsified with a nonionic surfactant, the emulsion having a solid concentration of 40% by weight and the copolymer being a wax having a melting point of 69°C, were blended so as to give an ethylene-vinyl acetate copolymer/paraffin wax ratio of 90/10 in terms of solid content. Further, the resulting blend was diluted with purified water to a solid concentration of 10% by weight. Then, an EPDM foam material, a crosslinked rubber, having a bulk density of 120 kg/cm³, a thickness of 15.0 mm and a size of 50 mm X 50 mm was impregnated with this blend, squeezed with a roll, and dried at 120°C for 2 hours to prepare the EPDM foam material impregnated with the ethylene-vinyl acetate copolymer and the paraffin wax. The total amount of the ethylene-vinyl acetate copolymer and the paraffin wax with which the EPDM foam material was impregnated was 0.02 g/cm³. The shape retaining operations of compressing the EPDM foam material with a hot press of 100°C together with a 5-mm thick spacer, retaining it for about 5 minutes as it was, thereafter cooling the hot press to 25°C, and releasing the pressure after cooling was carried out to prepare a test piece.

### Example 2

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 80/20 in terms of solid content. The total amount of the ethylene-vinyl acetate copolymer and the paraffin wax with which the EPDM foam material was impregnated was 0.02 g/cm³.

### Example 3

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 60/40 in terms of solid content. The total amount of the ethylene-vinyl acetate copolymer and the paraffin wax with which the EPDM foam material was impregnated was 0.02 g/cm³.

### Example 4

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 30/70 in terms of solid content. The total amount of the ethylene-vinyl acetate copolymer and the paraffin wax with which the EPDM foam material was impregnated was 0.02 g/cm³.

### Example 5

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 10/90 in terms of solid content. The total amount of the ethylene-vinyl acetate copolymer and the paraffin wax with which the EPDM foam material was impregnated was 0.02 g/cm³.

### Example 6

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 80/20 in terms of solid content, and that the solid concentration of the blend was adjusted to 5% by weight. The total amount of the ethylene-vinyl acetate copolymer and the paraffin wax with which the EPDM foam material was impregnated was 0.01 g/cm³.

### Example 7

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 80/20 in terms of solid content, and that the solid concentration of the blend was adjusted to 20% by weight. The total amount of the ethylene-vinyl acetate copolymer and the paraffin wax with which the EPDM foam material was impregnated was 0.04 g/cm³.

### Example 8

A test piece was prepared in the same manner as in Example 1 with the exception that the emulsion of the ethylene-vinyl acetate copolymer and the emulsion of the paraffin wax were blended so as to give an ethylene-vinyl acetate copolymer/paraffin wax ratio of 80/20 in terms of solid content, and that the solid concentration of the blend was adjusted to 40% by weight. The total amount of the ethylene-vinyl acetate copolymer and the paraffin wax with which the EPDM foam material was impregnated was 0.8 g/cm³.

### Comparative Example 1

A test piece was prepared in the same manner as in Example 1 with the exceptions that only the paraffin wax emulsion was used without using the ethylene-vinyl acetate copolymer, and the solid concentration of the emulsion was adjusted to 10% by weight. The amount of the paraffin wax with which the EPDM foam material was impregnated was 0.02 g/cm³.

### Comparative Example 2

A test piece was prepared in the same manner as in Example 2 with the exception that a flexible polyurethane foam material having a bulk density of 0.023 kg/m³ was used in place of the EPDM foam material. The total amount of the ethylene-vinyl acetate copolymer and the paraffin wax with which the flexible polyurethane foam material was impregnated was 0.02 g/cm³.

### Comparative Example 3

A test piece was prepared in the same manner as in Example 1 with the exception that an emulsion of polystyrene (glass transition temperature: 100°C), an amorphous thermoplastic resin, emulsified with a nonionic surfactant was diluted with purified water to 10% by weight in terms of solid content, using neither the ethylene-vinyl acetate copolymer nor the paraffin wax. The amount of polystyrene with which the EPDM foam material was impregnated was 0.02 g/cm³.

That is, the test piece of each Example described above was obtained by impregnating the foam material comprising the crosslinked rubber with the crystalline thermoplastic resin and the wax, heating and compressing the foam material impregnated, then, cooling it to ordinary temperature (20°C) while maintaining the compressed state, and releasing the pressure after cooling. Further, for both the crystalline thermoplastic resin and the wax, the emulsions stabilized with the nonionic surfactants were used. Furthermore, in all of Examples 1 to 5, the same foam material comprising the crosslinked rubber was used, and the crystalline thermoplastic resin/wax ratio was changed. In all of Examples 2 and 6 to 8, the same foam material comprising the crosslinked rubber was used, the same crystalline thermoplastic resin/wax ratio was used, and the total amount of the crystalline thermoplastic resin and the wax with which the foam material was impregnated was changed. In

In Comparative Example 1, the foam material comprising the crosslinked rubber was impregnated with the wax alone. In Comparative Example 2, the flexible polyurethane foam material different from the crosslinked rubber was used. In Comparative Example 3, polystyrene which is a amorphous resin was used in place of the crystalline thermoplastic resin.

For the test pieces obtained in respective Examples and Comparative Examples described above, the thickness was measured at 25°C after the shape retaining operations, and a shape retaining test and a thermal expansion test were conducted.

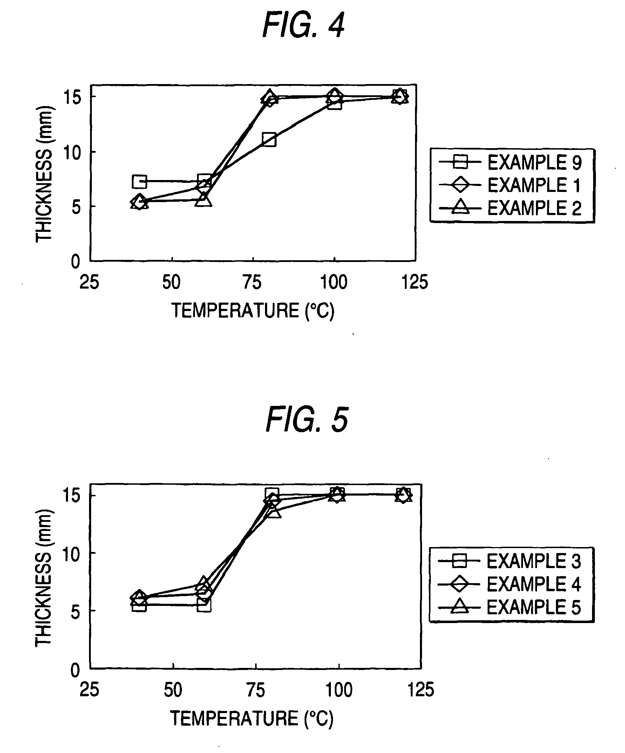

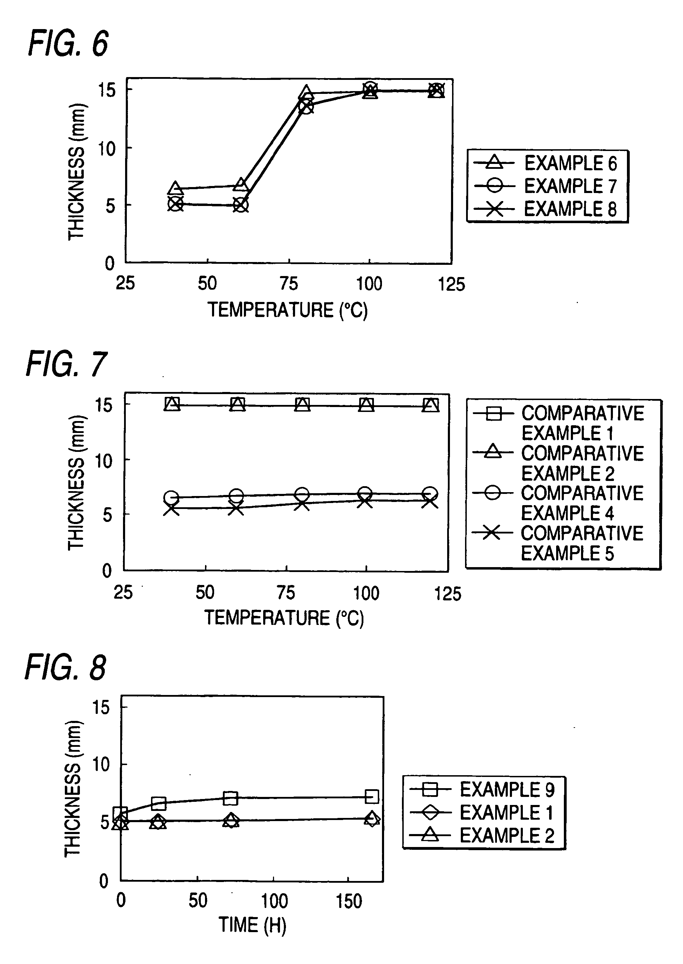

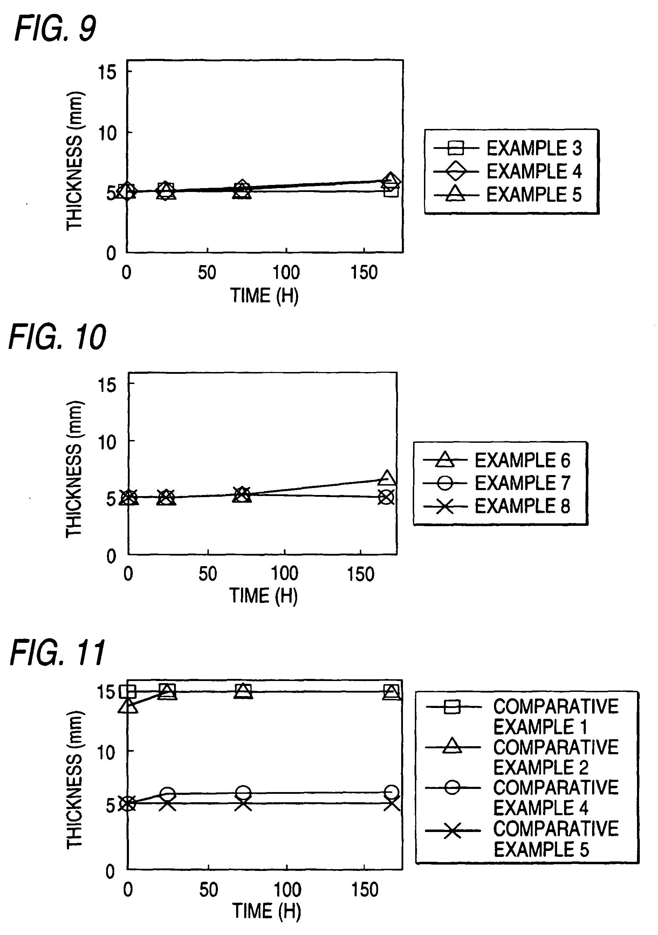

In the shape retaining test, the test pieces were placed in a temperature controlled oven, and the thicknesses after 24 hours, 72 hours and 168 hours were measured. For the test pieces subjected to this operation, the thermal expansion test was conducted as such. In the thermal expansion test, the four test pieces were prepared, and each placed in temperature controlled ovens of 40°C, 60°C, 80°C and 120°C, respectively. Then, the thicknesses thereof were measured after 30 minutes. The specifications of the respective test pieces, the results of the shape retaining test and results of the thermal expansion test are shown in Tables 1 and 2, the results of the shape retaining test are shown in Figs. 8 to 11, and the results of the thermal expansion test are shown in Figs. 4 to 7. In the results of the shape retaining test shown in Tables 1 and 2, the case where an increase in thickness after an elapse of 168 hours was 2.5 mm or less (corresponding to an expansion rate of 30% or less based on the thickness of the spacer) is indicated as "good", and the case where an increase in thickness exceeded 2.5 mm is indicated as "poor". In the results of the thermal expansion test, the case where the thickness rapidly increased 2 times or more between a temperature difference of 20°C in a certain temperature range is indicated as "good", the case where the thickness slowly increased 2 times or more between a temperature difference of 40°C in a certain temperature range is indicated as "fair", and the case where the thickness did not increase 2 times or more between a temperature difference of 40°C in a certain temperature range is indicated as "poor".

**Table 1**

| | Example 1 | Example 2 | Example 3 | Example 4 | Example 5 | Example 6 | Example 7 | Example 8 |
|---|---|---|---|---|---|---|---|---|
| Raw Material for Foam Material | EPDM | EPDM | EPDM | EPDM | EPDM | EPDM | EPDM | EPDM |
| Ethylene-Vinyl Acetate Ccpolymer/Paraffin | 90:10 | 80:20 | 60:40 | 30:70 | 10:90 | 80:20 | 80:20 | 80:20 |
| Ratio (in terms of solid content) | | | | | | | | |
| Kind of Surfactant of Ethylene-Vinyl Acetate | Nonionic | Nonionic | Nonionic | Nonionic | Nonionic | Nonionic | Nonionic | Nonionic |
| Copolymer Emulsion | | | | | | | | |
| Kind of Surfactant of Paraffin Wax Emulsion | Nonionic | Nonionic | Nonionic | Nonionic | Nonionic | Nonionic | Nonionic | Nonionic |
| State of Blend after Blending of Emulsions | No change | No change | No change | No change | No change | No change | No change | No change |
| Amount of Impregnation (g/cm³) | 0.02 | 0.02 | 0.02 | 0.02 | 0.02 | 0.01 | 0.04 | 0.08 |
| Shape Retaining Characteristics | Good | Good | Good | Good | Good | Good | Good | Good |
| Thermal Expansion Characteristics | Good | Good | Good | Good | Good | Good | Good | Good |

**Table 2**

| | Comparative Example 1 | Comparative Example 2 | Comparative Example 3 |
|---|---|---|---|
| Raw Material for Foam Material. | EPDM | Flexible Polyurethane | EPDM |
| Ethylene-Vinyl Acetate Copolymer/Paraffin | 0:100 | 80:20 | Not used |
| Ratio (in terms of solid content) | | | |
| Kind of Surfactant of Ethylene-Vinyl Acetate | - | Nonionic | - |
| Copolymer Emulsion | | | |
| Kind of Surfactant of Paraffin Wax Emulsion. | Nonionic | Nonionic | - |
| Use/No Use of Polystyrene Emulsion | Not used | Not used | Used |
| State of Blend after Blending of Emulsions | - | - | - |
| Amount of impregnation (g/cm³) | 0.02 | 0.02 | 0.02 |
| Shape Retaining Characteristics | Poor | Good | Good |
| Thermal Expansion Characteristics | Poor | Poor | Poor |

As shown in Tables 1 and 2, in respective Examples and Comparative Example 1 using the crystalline thermoplastic resin emulsion and the wax emulsion both emulsified with the nonionic surfactants, the test pieces was able to be easily prepared.

Further, in the shape retaining test, the test pieces of respective Examples kept a thickness of about 5 mm, the thickness of the spacer. In contrast, the test pieces of Comparative Example 1 was restored in thickness to the original crosslinked rubbers immediately or within 24 hours after the shape retaining operations to fail to retain the shape. Of the test pieces of Examples, some slightly increased in thickness. However, the increased amount thereof was slight, the thickness after 168 hours was approximately equal to that after 24 hours, and the thickness was kept approximately constant.

In the thermal expansion test, the test pieces of Examples 1 to 8 were approximately restored in shape within 30 minutes at a temperature of 80°C, the melting points of the thermoplastic resin and wax used. That is, the test pieces of Examples 1 to 8 are materials which can maintain the compressed shape thereof at 50°C for a long period of time and expand within 30 minutes on heating at 80°C or higher. In contrast, the test pieces of Comparative Example 1 were already restored in thickness to the original ones after the shape retaining test, and changes by heating were not observed. Further, the test pieces of Comparative Examples 2 and 3 scarcely expanded even when heated to 120°C. In particular, the test piece of Comparative Example 3 was extremely slight in expansion around the glass transition temperature, because the amorphous resin having a glass transition temperature of 100°C was used. These results apparently show that the thermally expandable materials according to the invention have good shape retaining properties and shape restoring properties, and further, can be easily obtained.

As described above, according to the invention, there can be easily provided the thermally expandable material excellent in the respective performances of fluid sealing, soundproofing and heat insulation and also in a mounting operation on each site to be treated, and inexpensively obtained without requiring a special material and equipment in the production. Further, there can be provided the joint material excellent in the sealing performance and the soundproof cover for an automobile engine excellent in soundproofing properties, using the above-mentioned thermally expandable material.

## Claims

1. A thermally expandable material, obtainable by a process comprising the steps of:
impregnating a foam material with an emulsion of a crystalline thermoplastic resin;
heating the foam material thus impregnated at a temperature higher than the melting point of the crystalline thermoplastic resin and, either concurrently with or subsequently to the heating, compressing the impregnated foam material; and
cooling the heated and compressed product as it is compressed;
**characterized in that** the process further comprises the further step of impregnating the foam material with a wax, and **in that** the foam material comprises a cross-linked rubber.

2. The thermally expandable material according to claim 1, wherein the foam material comprising the cross-linked rubber is impregnated with the crystalline thermoplastic resin and the wax in a total amount of 0.002 g to 0.1 g per cm³ of the foam material.

3. The thermally expandable material according to claim 1 or 2, wherein the weight ratio of the crystalline thermoplastic resin to the wax is from 1:99 to 99:1.

4. The thermally expandable material according to any one of claims 1 to 3, wherein both the crystalline thermoplastic resin and the wax have a melting point of from 40 to 120°C.

5. The thermally expandable material according to any one of claims 1 to 4, wherein the crystalline thermoplastic resin is polyethylene or an ethylene copolymer.

6. The thermally expandable material according to any one of claims 1 to 5, wherein the crystalline thermoplastic resin is an ethylene-vinyl acetate copolymer.

7. The thermally expandable material according to any one of claims 1 to 6, wherein the wax is a paraffin wax.

8. The thermally expandable material according to any one of claims 1 to 6, wherein both the crystalline thermoplastic resin and the wax are used in the form of emulsions.

9. The thermally expandable material according to any one of claims 1 to 6, wherein both the crystalline thermoplastic resin and the wax are used in the form of nonionic surfactant-containing emulsions.

10. The thermally expandable material according to any one of claims 1 to 9, wherein the crosslinked rubber comprises EPDM.

11. The thermally expandable material according to claim 1, wherein the impregnating of the foam material is carried out with an emulsion of a wax, and
wherein the heating step is carried out at a temperature higher than melting points of the crystalline thermoplastic resin and the wax.

12. A joint material comprising a thermally expandable material according to any one of claims 1 to 10.

13. A soundproof cover for an automobile engine comprising a thermally expandable material according to any one of claims 1 to 10 as a joint material.

## Patentansprüche

1. Thermisch expandierbares Material, erhältlich durch ein Verfahren, umfassend die Schritte:
Imprägnieren eines Schaummaterials mit einer Emulsion eines kristallinen, thermoplastischen Harzes;
Erhitzen des so imprägnierten Schaummaterials bei einer Temperatur, die höher ist als der Schmelzpunkt des kristallinen, thermoplastischen Harzes und, entweder gleichzeitig mit oder nach dem Erhitzen, Zusammendrücken des imprägnierten Schaummaterials; und
Kühlen des erhitzten und zusammengedrückten Produkts, während es zusammengedrückt ist;
**dadurch gekennzeichnet, dass** das Verfahren zusätzlich den weiteren Schritt des Imprägnierens des Schaummaterials mit einem Wachs umfasst, und dass das Schaummaterial einen vernetzten Gummi umfasst.

2. Thermisch expandierbares Material gemäß Anspruch 1, wobei das Schaummaterial, das den vernetzten Gummi umfasst, mit dem kristallinen, thermoplastischen Harz und dem Wachs in einer Gesamtmenge von 0,002 g bis 0,1 g pro cm³ des Schaummaterials imprägniert ist.

3. Thermisch expandierbares Material gemäß Anspruch 1 oder 2, wobei das Gewichtsverhältnis des kristallinen, thermoplastischen Harzes zum Wachs von 1:99 bis 99:1 ist.

4. Thermisch expandierbares Material gemäß einem der Ansprüche 1 bis 3, wobei sowohl das kristalline, thermoplastische Harz als auch das Wachs einen Schmelzpunkt von 40 bis 120°C besitzen.

5. Thermisch expandierbares Material gemäß einem der Ansprüche 1 bis 4, wobei das kristalline, thermoplastische Harz ein Polyethylen oder ein Ethylencopolymer ist.

6. Thermisch expandierbares Material gemäß einem der Ansprüche 1 bis 5, wobei das kristalline, thermoplastische Harz ein Ethylen-Vinylacetat Copolymer ist.

7. Thermisch expandierbares Material gemäß einem der Ansprüche 1 bis 6, wobei das Wachs ein Paraffinwachs ist.

8. Thermisch expandierbares Material gemäß einem der Ansprüche 1 bis 6, wobei sowohl das kristalline, thermoplastische Harz als auch das Wachs in der Form von Emulsionen verwendet werden.

9. Thermisch expandierbares Material gemäß einem der Ansprüche 1 bis 6, wobei sowohl das kristalline, thermoplastische Harz als auch das Wachs in der Form von Emulsionen, die nicht ionisches Tensid enthalten, verwendet werden.

10. Thermisch expandierbares Material gemäß einem der Ansprüche 1 bis 9, wobei der vernetzte Gummi EPDM umfasst.

11. Thermisch expandierbares Material gemäß Anspruch 1, wobei das Imprägnieren des Schaummaterials mit einer Emulsion eines Wachses durchgeführt wird, und
wobei der Schritt des Erhitzens bei einer Temperatur durchgeführt wird, die höher als die Schmelzpunkte des kristallinen, thermoplastischen Harzes und des Wachses ist.

12. Verbundmaterial, umfassend ein thermisch expandierbares Material gemäß einem der Ansprüche 1 bis 10.

13. Schalldichter Überzug für einen Automobilmotor, umfassend ein thermisch expandierbares Material gemäß einem der Ansprüche 1 bis 10 als ein Verbundmaterial.

## Revendications

1. Matériau thermoexpansible pouvant être obtenu par un procédé comprenant les étapes :
d'imprégnation d'un matériau de mousse avec une émulsion d'une résine thermoplastique cristalline ;
de chauffage du matériau de mousse ainsi imprégné à une température supérieure au point de fusion de la résine thermoplastique cristalline et, soit concurremment, soit après le chauffage, de compression du matériau de mousse imprégné ; et
de refroidissement du produit chauffé et comprimé lorsqu'il est comprimé ;
**caractérisé en ce que** le procédé comprend de plus l'étape supplémentaire d'imprégnation du matériau de mousse avec une cire, et **en ce que** le matériau de mousse comprend un caoutchouc réticulé.

2. Matériau thermoexpansible selon la revendication 1, dans lequel le matériau de mousse comprenant le caoutchouc réticulé est imprégné avec la résine thermoplastique cristalline et la cire dans une quantité totale de 0,002 g à 0,1 g par cm³ du matériau de mousse.

3. Matériau thermoexpansible selon la revendication 1 ou 2, dans lequel le rapport massique de la résine thermoplastique cristalline à la cire est de 1 : 99 à 99 : 1.

4. Matériau thermoexpansible selon l'une quelconque des revendications 1 à 3, dans lequel à la fois la résine thermoplastique cristalline et la cire présentent un point de fusion de 40 à 120°C.

5. Matériau thermoexpansible selon l'une quelconque des revendications 1 à 4, dans lequel la résine thermoplastique cristalline est un polyéthylène ou un copolymère d'éthylène.

6. Matériau thermoexpansible selon l'une quelconque des revendications 1 à 5, dans lequel la résine thermoplastique cristalline est un copolymère d'éthylène-acétate de vinyle.

7. Matériau thermoexpansible selon l'une quelconque des revendications 1 à 6, dans lequel la cire est une cire de paraffine.

8. Matériau thermoexpansible selon l'une quelconque des revendications 1 à 6, dans lequel à la fois la résine thermoplastique cristalline et la cire sont utilisées dans la forme d'émulsions.

9. Matériau thermoexpansible selon l'une quelconque des revendications 1 à 6, dans lequel à la fois la résine thermoplastique cristalline et la cire sont utilisées dans la forme d'émulsions contenant un tensioactif non ionique.

10. Matériau thermoexpansible selon l'une quelconque des revendications 1 à 9, dans lequel le caoutchouc réticulé comprend EPDM.

11. Matériau thermoexpansible selon la revendication 1, dans lequel l'imprégnation du matériau de mousse est réalisée avec une émulsion d'une cire, et dans lequel l'étape de chauffage est réalisée à une température supérieure aux points de fusion de la résine thermoplastique cristalline et de la cire.

12. Matériau de joint comprenant un matériau thermoexpansible selon l'une quelconque des revendications 1 à 10.

13. Couvercle insonorisé pour un moteur de véhicule automobile comprenant un matériau thermoexpansible selon l'une quelconque des revendications 1 à 10 comme un matériau de joint.
